# EUROPEAN PATENT APPLICATION

(11) **EP 3 656 708 A1**
(43) Date of publication of application: **27.05.2020**
(21) Application number: 18207541.6
(22) Date of filing: 21.11.2018
(51) Int. Cl.: B65G 47/68, B65G 47/22, B65G 47/71, B65G 47/53

(54) **CONVEYOR UNIT**

(71) Applicant: Riantics A/S, 9510 Arden (DK)
(72) Inventor: Hansen, Andreas Skafte Brahe, 9510 Arden (DK)
(74) Representative: Chas. Hude A/S

(57) **Abstract**

Conveyor unit (1a) for aligning elements (2) during transportation along a surface (3), said conveyor unit (1a) is adapted to convey elements (2) from first positions on said surface (3) towards aligned second positions on said surface (3) of said conveyor unit (1a), where said unit (1a) comprises multiple discrete conveyor segments (8a-8k) each extending along the surface (3) of said conveyor unit (1a) and each being defined by a starting point (9a-9k) and an end point (9a'-9k'), wherein at least part of said discrete conveyor segments (8a-8k) are oriented towards the same sub-section (10) of the surface (3) of said conveyer unit (1a) with their end points (9a'-9k') positioned in said sub-section (10), whereby during the transportation of said elements (2) along the surface (3) of said conveyer unit (1a), said elements (2) are aligned in said sub-section (10) so that they leave said conveyor unit (1a) in an aligned manner.

## Description

The present invention relates to a conveyor unit for aligning elements during transportation along a surface of said conveyor unit, said conveyor unit is adapted to convey elements from first positions on said surface towards aligned second positions on the surface of said conveyor unit. The present invention further relates to a conveyor system comprising a conveyor unit.

In production/manufacturing lines in a factory, it is well known to use one or more conveyor units for transporting elements from one place to another. The conveyor units may be either of the conveyor roller or conveyor belt type depending e.g. on the type of elements to be transported.

Often, in a production line, more than one conveyor unit and one or more production units are combined, which e.g. requires that elements from two different conveyor units are combined and placed uniformly on one single conveyor unit, or that elements from a production unit, which are randomly placed on one conveyor unit, are positioned uniformly on another conveyor unit. The placing of the elements uniformly on a conveyor unit may be done by providing different guiding elements such as plates. However, usually the guiding elements require a lot of space and the guiding can be time-consuming.

Thus, a conveyor unit and a system comprising a conveyor unit are required which combine, sort and/or align elements in a fast way and which take up minimum space.

In accordance with the invention, there is provided a conveyor unit for aligning elements during transportation along a surface of said conveyor unit, said conveyor unit is adapted to convey elements from first positions on said surface towards aligned second positions on the surface of said conveyor unit, where said unit comprises multiple discrete conveyor segments each extending along the surface of said conveyor unit and each being defined by a starting point and an end point, wherein at least part of said discrete conveyor segments are oriented towards the same sub-section of the surface of said conveyor unit with their end points positioned in said sub-section, whereby during the transportation of said elements along the surface of said conveyor unit, said elements are aligned in said sub-section so that they leave said conveyor unit in an aligned manner.

Providing a conveyor unit, which comprises multiple discrete conveyor segments, has the advantage that the conveyed elements, such as goods or parts of an apparatus to be assembled, entering the conveyor unit can be guided along a short path on the surface of the conveyor unit defined by the user, simply by arranging the conveyor segments along said path. If the user wants said elements to be conveyed from a right-hand side at the inlet of the conveyor unit to a left-hand side at the outlet of the conveyor unit, conveyor segments have to be arranged on the surface of the conveyor unit so that their conveying direction goes from right to left, possibly several conveyor units arranged next to each other to support each other in transporting said element. Thereby, the elements do not drop off the conveying path accidentally.

Having multiple discrete conveyor segments further provides the opportunity of transporting two or more elements coming from different directions towards the same position at the outlet of the conveyor unit so that the elements can leave the conveyor unit positioned uniformly and in an aligned manner.

Thus, the conveyor unit provides a fast combining, sorting and/or aligning of elements and takes up a minimum of space.

In an embodiment, at least part of said conveyor segments can extend linearly and can be angled relative to a longitudinal axis of the conveyor unit.

Thereby, the conveyor unit does not simply convey elements linearly across the surface of the conveyor unit, but instead ensures that the elements are positioned uniformly/similarly/aligned, when they leave the conveyor unit.

In an embodiment, at least part of said conveyor segments can extend at least partly curvilinear.

Thereby, a change of conveying direction can take place smoothly on one conveyor segment compared to if the change of direction had to take place by two conveyor segments being placed with an angle relative to each other which would result in a more rapid change of direction.

At least part of said conveyor segments can therefore have a bend or curve-like shape, either partly of completely.

In an embodiment, the intersection between said sub-section and an edge of said surface of said conveyor unit can define the outlet for conveyed elements from the conveyor unit.

As said, this means that said conveyor segments will each aim at transporting the elements towards their end point and as a result, the elements will be transported to the sub-section and finally to said intersection of the sub-section and said edge. Therefore, said sub-section may either extend parallel or with an angle or a bend (e.g. circular) relative to the longitudinal axis of the conveyor unit.

In an embodiment, the intersection between said sub-section, which is projected parallel with said longitudinal axis, and said edge can define the outlet of conveyed elements from the conveyor unit.

By providing that the outlet of conveyed elements is defined by the intersection between a sub-section, which is projected parallel with said longitudinal axis, and said edge, the desired uniform/aligned positioning of elements leaving the conveyor unit is enhanced. This means that the elements may then be aligned correctly, i.e. corresponding to the desired outlet position, at a distance from the edge (outlet), compared to if the sub-section extends with an angle to the longitudinal axis of the conveyor unit, as here the elements are closer to the edge before the desired outlet position is reached.

In an embodiment, said conveyor segments can be conveyor belts.

Conveyor belts are reliable means for transporting elements in a stable way.

In an embodiment, said conveyor segments can be conveyor rollers.

Conveyor rollers are reliable means for transporting elements, and may easily change the conveying direction and still provide a smooth transportation of the elements.

In an embodiment, at least two of the multiple discrete conveyor segments can be angled towards each other.

In an embodiment, at least two of the multiple discrete conveyor segments can converge towards each other.

Therefore, the multiple discrete conveyor segments may converge towards each other two by two and have their end points placed in the vicinity of each other.

Thereby, the elements to be conveyed may be introduced onto the conveyor unit from at least two different directions (such as from three or four), but still arrive at the same location at the outlet of the conveyor unit, and therefore leave the conveyor unit in an aligned manner.

In an embodiment, the end points can form a continuous path in said sub-section, where said path ends at said outlet of the conveyor unit.

Thereby, the elements to be conveyed may be continuously conveyed from one conveyor segment to the next on its way towards said outlet of the conveyor unit.

In an embodiment, the distance between an end point of one conveyor segment and the location of another conveyor segment can be less than the width of the elements to be conveyed.

This way an element being output from one conveyor segment will always be carried further by another conveyor segment, until the element reaches said outlet of the conveyor unit.

In an embodiment, the distance between two consecutive conveyor segment end points in said sub-section can be less than the width of the elements to be conveyed.

If said distance is less than the elements to be conveyed, it is ensured that elements are not output at the end of one conveyor segment and accidentally not carried further towards said outlet of the conveyor unit by another conveyor segment. This way, an element, which has entered said sub-section of the conveyor unit, will remain in said sub-section until it leaves the outlet of the conveyor unit at an edge of the surface of the conveyor unit.

In an embodiment, at least two of the multiple discrete conveyor segments can have a different conveying speed.

Thereby, elements may e.g. be conveyed at one speed if their direction of movement has to be adjusted further, and at a higher speed, when the elements do not have to be adjusted anymore, but only have to be transported to the outlet of the conveyor unit.

Further, by providing different conveying speeds, the separation and controlling of the elements are facilitated. This is because the frictional force between the element and the conveyor segment is the determining factor for the movement of the element. As an example, if the user wants the direction of movement of the elements to be controlled more by some conveyor segments than others, their conveying speed can be set to a higher value.

The present invention further relates to a conveyor system comprising a conveyor unit according to any of the embodiments described above.

The structure and function of the conveyor unit and system will be described in more detail below with references to exemplary embodiments shown in the drawings wherein,
Fig. 1 shows an embodiment of a conveyor system comprising a conveyor unit and the possible conveying path of elements on the conveyor unit.
Fig. 2 shows an embodiment of a conveyor unit with conveyor segments angled towards each other.
Fig. 3 shows an embodiment of a conveyor unit with conveyor segments angled towards each other.
Fig. 4 shows an embodiment of a conveyor unit with conveyor segments angled similarly.
Fig. 5 shows an embodiment of a conveyor unit with conveyor segments angled similarly and with conveyor segments ending outside the sub-section.
Fig. 6 shows an embodiment of a conveyor unit with conveyor segments angled towards each other.
Fig. 7 shows an embodiment of a conveyor unit with conveyor segments angled towards each other and with curved/bend segments.
Fig. 8 shows an embodiment of a conveyor system comprising a conveyor unit and the possible conveying path of elements on the conveyor unit.
Fig. 9 shows an embodiment of a conveyor unit with conveyor segments angled similarly.
Fig. 10 shows an embodiment of a conveyor unit with conveyor segments angled similarly.
Fig. 11 shows an embodiment of a conveyor unit with conveyor segments angled towards each other.
Fig. 12 shows an embodiment of a conveyor unit with conveyor segments angled towards each other.

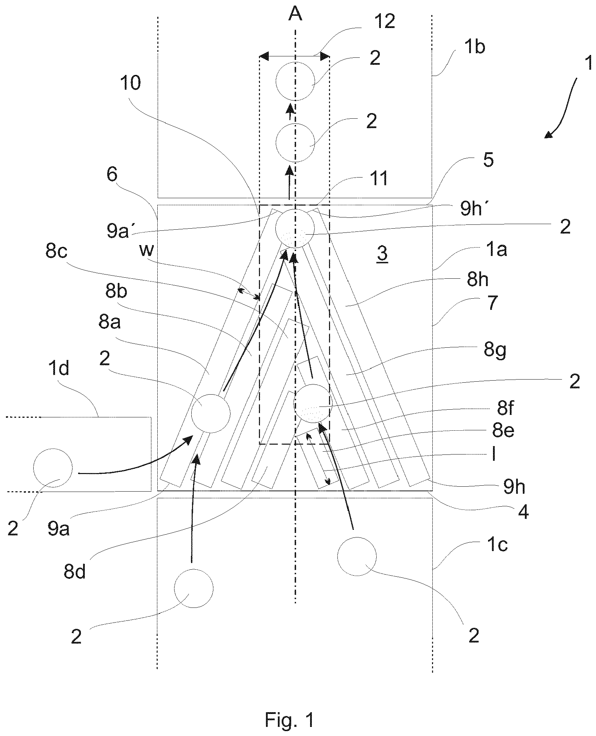

Fig. 1 shows an embodiment of a conveyor system 1 comprising a conveyor unit 1a and the possible conveying path of elements 2 on the conveyor unit 1a.

In Fig. 1, the conveyor system 1 is shown to comprise the conveyor unit 1a, an outfeed conveyor unit 1b, a first infeed conveyor unit 1c, and a second infeed conveyor unit 1d.

The surface 3 of said conveyor unit 1a may have a four-sided shape as shown in Fig. 1, but other shapes such as three-sided or many-sided are also foreseen. The four-sided surface in Fig. 1 is shown to have a first 4 and an oppositely positioned second edge 5, and a first 6 and second side edge 7.

It is shown that elements 2 may be fed to the conveyor unit 1a via either the first infeed conveyor unit 1c or the second infeed conveyor unit 1d, i.e. across (via) a first edge 4 or the first side edge 6, respectively - or from both to respective first positions on the surface 3 of the conveyor unit 1a. However, the elements 2 may also be fed to the conveyor unit 1a from a vertically higher position, and may as such be dropped or placed on the conveyor unit 1a at respective first positions.

The elements 2 may be arranged in a disordered/un-uniform/misaligned manner, when being transported by said infeed conveyor units 1b, 1c. However, after being conveyed by the conveyor unit 1a, the conveyed elements 2 leave the conveyor unit 1a via the outlet 11 at said second edge 5 in a uniform/aligned manner so that said elements 2 are provided in line to the outfeed conveyor unit 1b.

Said conveyor unit 1a comprises multiple discrete conveyor segments 8a-8h which are shown in Fig. 1 to be eight conveyor segments 8a-8h, but it may also be fewer or more depending on e.g. the purpose and size of the conveyor unit 1a. Each of said discrete conveyor segments 8a-8h may extend linearly along the surface 3 of said conveyor unit 1a and each may be defined by a starting point 9a-9h and an end point 9a'-9h', such that elements 2 conveyed on the conveyor segments 8a-8h move in a direction from said starting point 9a-9h to said end point 9a'-9h'.

Each of said conveyor segments 8a-8h has a width w and a length I which may be similar or vary. In Fig. 1, the widths w are illustrated to be similar for all said conveyor segments, while the lengths are varying.

In Fig. 1, each of the conveyor segments 8a-8h is angled relative to a longitudinal axis A of the conveyor unit 1a. Further, the conveyor segments 8a-8d and the conveyor segments 8e-8h are angled towards each other and meet in the vicinity of the longitudinal axis A.

The end points 9a'-9h' of the conveyor segments 8a-8h are seen to be positioned so that they are coincident with a sub-section 10 (indicated by the broken line) on said surface 3. The intersection 11 between said sub-section 10 and said second edge 5 of the surface 3 defines the outlet 11 (having a width 12) for conveyed elements 2 from the conveyor unit 1a. In Fig. 1, the outlet 11 is placed at a central position of said second edge 5. The end points 9a'-9h' may form a continuous path in said sub-section 10, where said path ends at said second edge 5 of the conveyor unit 1a.

The distance between an end point 9a'-9h' of one conveyor segment (e.g. 8a) and the location of another conveyor segment (e.g. 8h) may be less than the width of the elements 2 to be conveyed.

The distance between two consecutive end points (such as end point 9e and end point 9d) in said sub-section 10 may be less than the width of the elements 2 to be conveyed.

As is illustrated in Fig. 1, elements 2, here in the form of circular good, may be introduced onto the conveyor unit 1a either via the second edge 5 or via the first 6 or second side edge 7 depending on the location of the conveyor segments on said surface 3. However, as written above, the elements 2 may also be introduced from a vertically higher position. Thus, if e.g. the elements are introduced via the first side edge 6 and the first edge 4, conveyor segments 8a-8h have to be placed at these locations so that the elements 2 can be transported from here to said sub-section 10 and finally to said outlet 11 of the conveyor unit 1a.

If the elements 2 are large/wide, they may cross two or more edges 4,5,6,7, when they are introduced to the conveyor unit 1a. For this reason, it may be advantageous that the conveyor segments 8a-8h start from said two or more edges 4,5,6,7 and are directed towards said sub-section. Thereby, large/wide elements 2 may also be aligned by the conveyor unit 1a.

In Fig. 1, the conveyor segments 8a-8h are illustrated as being conveyor belts, but conveyor rollers are also foreseen.

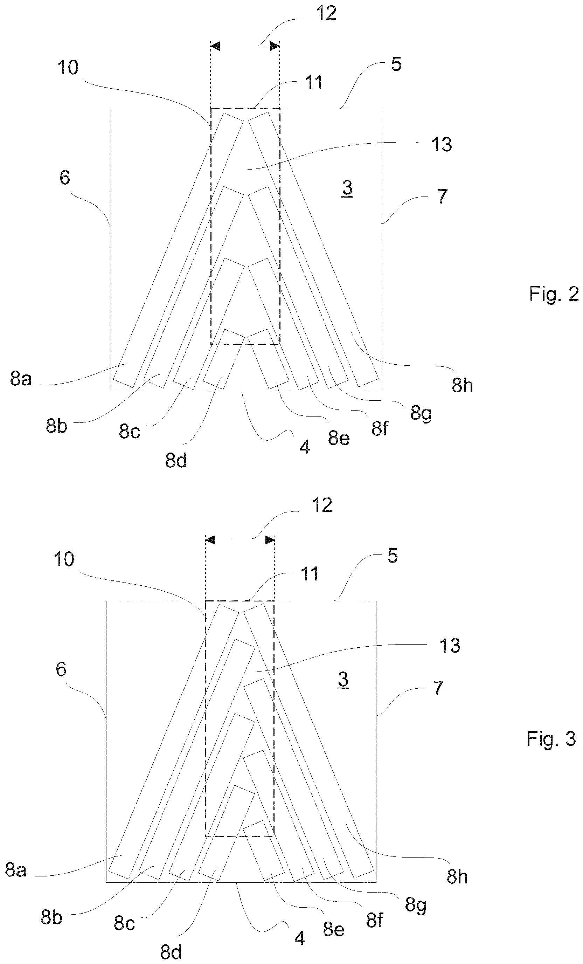

Fig. 2 shows an embodiment of a conveyor unit 1a with conveyor segments 8a-8h angled towards each other.

For similar technical features as shown in Fig. 1, the same reference numbers have been used.

In Fig. 2, the conveyor segments 8a-8d and the conveyor segments 8e-8h are shown to be angled towards each other. The conveyor segments 8a-8h may be seen to converge towards each other two by two, such as segment 8d and segment 8e etc.

Thereby, a space 13 is formed in the sub-section 10 between the conveyor segments 8a-8h, where there is no conveyor segment 8a-8h for, which reason only elements 2 should be used with a diameter larger than the width of said space 13. This way it is ensured that the elements 2 will not end in one of the spaces 13 and will not move any further.

Fig. 3 shows an embodiment of a conveyor unit 1a with conveyor segments 8a-8h angled towards each other, but in a different pattern than the pattern used in figure 1.

For similar technical features as shown in the previous Figs., the same reference numbers have been used.

In Fig. 3 the conveyor segments 8a-8h overlap each other alternately, so that the space 13, which was formed by the pattern of conveyor segments 8a-8h in Fig. 2, is formed to a less degree in Figs. 1 and 3. Thereby, elements 2 conveyed in Figs. 1 and 3 may have a smaller diameter than the elements 2 conveyed in Fig. 2.

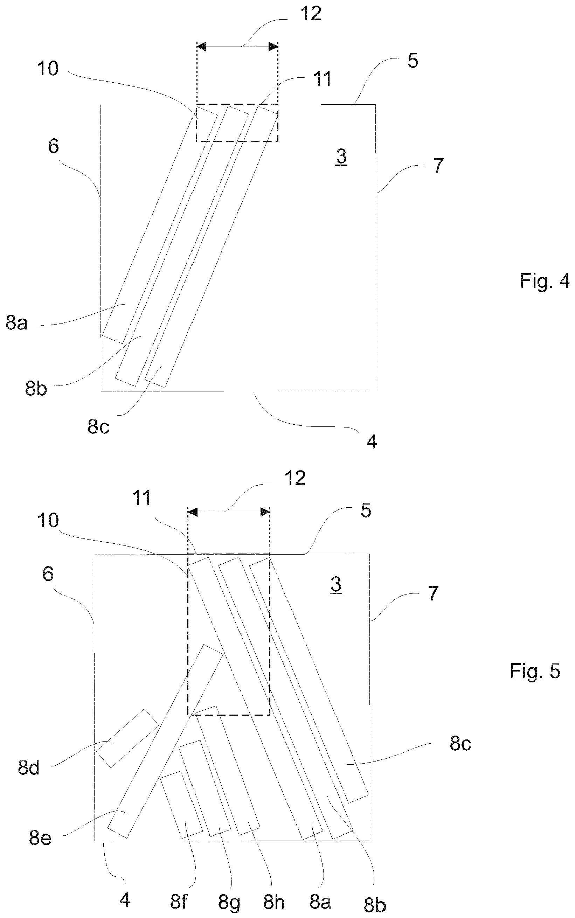

Figs. 4 and 5 show embodiments of a conveyor unit 1a with conveyor segments 8a-8c angled similarly. Fig. 5 further shows conveyor segments 8d-8h ending outside the sub-section 10.

For similar technical features as shown in the previous Figs., the same reference numbers have been used.

In Fig. 4, the conveyor segments 8a-8c are angled similarly and are therefore parallel. The elements 2 to be conveyed can therefore only be introduced from one direction, i.e. the left side.

In Fig. 5, the conveyor segments 8a-8c and 8f-8h are angled similarly and are therefore parallel. The conveyor segments 8d-8h are shown to have their end points 9d'-9h' positioned outside the sub-section 10 of the surface 3 of the conveyor unit 1a. Thus, all of the conveyor segments 8a-8h do not have to have their end points 9a'-9h' positioned in said sub-section 10, but should be directed towards said sub-section 10 (see conveyor segment 8d), or should have their end points 9a'-9h' positioned adjacent to a conveyor segment 8a-8h ending in or directed towards said sub-section 10 (see conveyor segment 8f-8g).

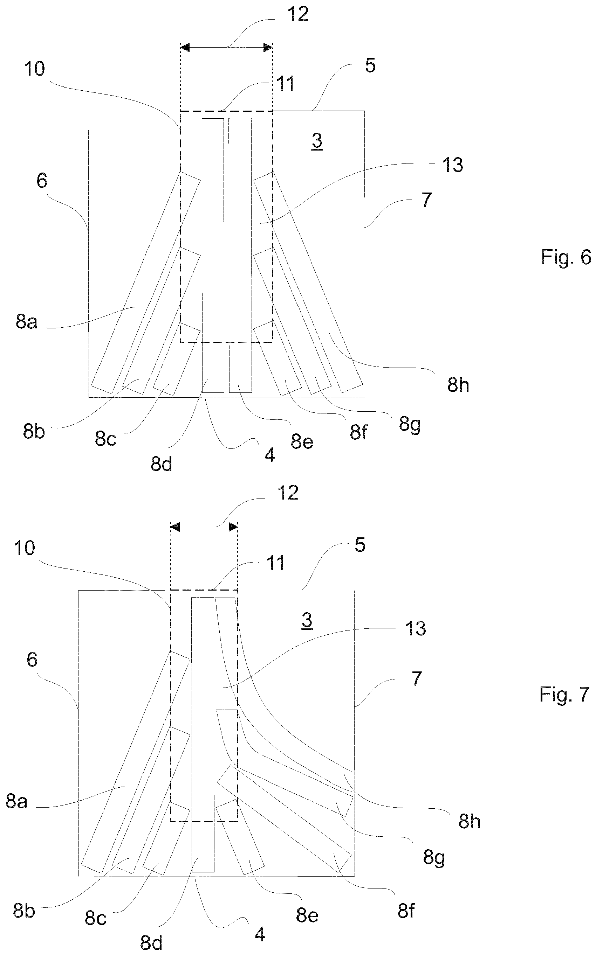

Fig. 6 shows an embodiment of a conveyor unit 1a with conveyor segments 8a-8h angled towards each other.

For similar technical features as shown in the previous Figs., the same reference numbers have been used.

In Fig. 6, angled conveyor segments 8a-8c and 8f-8h as described in the previous Figs. are combined with two conveyor segments 8d-8e extending parallel with the longitudinal axis A of the conveyor unit 1a.

Elements 2 to be conveyed may therefore be introduced from either a direction placed on the left side, the right side or in the centre of the first edge 4 of the conveyor unit 1a, but still arrive at the same location at the second edge 5 of the conveyor unit 1a, so that the elements 2 are positioned uniformly/aligned when leaving the conveyor unit 1a.

Depending on the size (diameter) of said elements 2 only one or more than two conveyor segments 8d-8e may be used to ensure that said elements 2 are arranged uniformly at the outlet 11. Thus, if the diameter of an element 2 is equal to or less that the width w of said conveyor segments 8d-8e, preferably only one conveyor segment 8d-8e is parallel with said longitudinal axis A. If, on the other hand, the diameter of an element 2 is larger than the width w of said conveyor segments 8d-8e, two or more conveyor segments 8d-8e parallel with said longitudinal axis A could be used.

Fig. 7 shows an embodiment of a conveyor unit 1a with conveyor segments 8a-8h angled towards each other and with curved/bend segments 8g-8h.

For similar technical features as shown in the previous Figs., the same reference numbers have been used.

As shown in Fig. 7, at least part of said conveyor segments 8g-8h may extend at least partly curvilinear. Thus, the conveyor segment 8g is shown to extend from the second side edge 7 to the sub-section 10 and is partly shaped like a curve, i.e. the part closest to the second side edge 7 extends linearly, and the part closest to the sub-section has a bend. Further, the conveyor segment 8h is shown to extend from the second side edge 7 to the sub-section 10 with the shape of a curve along the entire length of the segment 8h.

For all of the Figs. 1-7, it is foreseen that even more conveyor segments may be arranged on the surface 3 of the conveyor unit 1a, e.g. if the user wants to introduce elements 2 from the first 6 or second side edge 7.

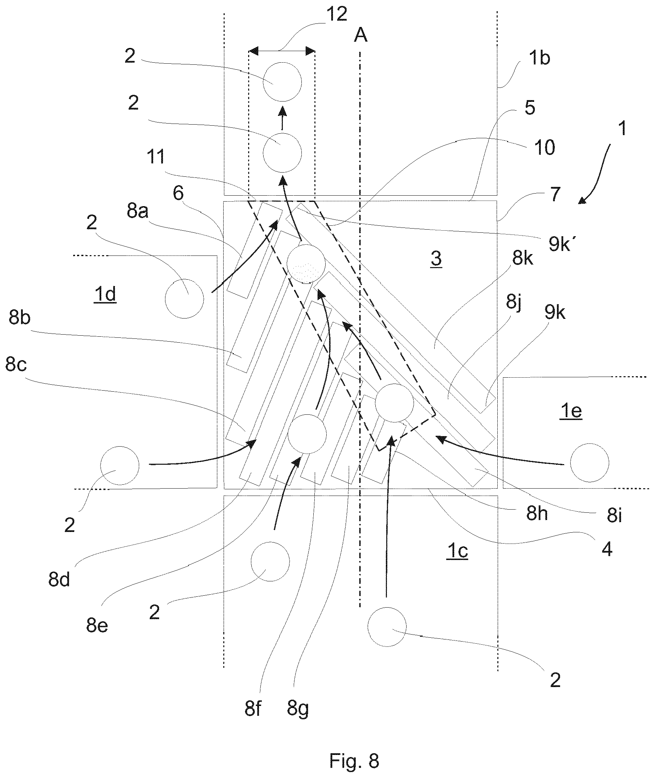

Fig. 8 shows an embodiment of a conveyor system 1 comprising a conveyor unit 1a with conveyor segments 8a-8k angled towards each other.

For similar technical features as shown in the previous Figs., the same reference numbers have been used.

In Fig. 8, the conveyor system 1 is shown to comprise the conveyor unit 1a, an outfeed conveyor unit 1b, a first infeed conveyor unit 1c, a second infeed conveyor unit 1d and a third infeed conveyor unit 1e.

It is shown that elements 2 may be fed to the conveyor unit 1a via either the first infeed conveyor unit 1c, the second infeed conveyor unit 1d or the third infeed conveyor unit 1e, i.e. across (via) the first edge, the first side edge 6 or the second side edge 7, respectively - or from some or all of the infeed conveyor units 1b, 1c, 1d at the same time to respective first positions on the surface 3 of the conveyor unit 1a. However, the elements 2 may also be fed to the conveyor unit 1a from a vertically higher position, and may as such be dropped or placed on the conveyor unit 1a at respective first positions.

The elements 2 may be arranged in a disordered/un-uniform/misaligned manner, when being transported by said infeed conveyor units 1b, 1c, 1d. However, after being conveyed by the conveyor unit 1a, the conveyed elements 2 leave the conveyor unit 1a via the outlet 11 at said second edge 5 in a uniform/aligned manner so that said elements 2 are provided in line to the outfeed conveyor unit 1b.

In Fig. 8, the end points 9a'-9k' of the conveyor segments 8a-8k are seen to be arranged so that the sub-section 10 of the surface 3 of the conveyor unit 1a extends with an angle relative to the longitudinal axis A of the conveyor unit 1a. The conveyed elements 2 then leave the conveyor unit 1a via the outlet 11 which is arranged away from the centre of the second edge 5.

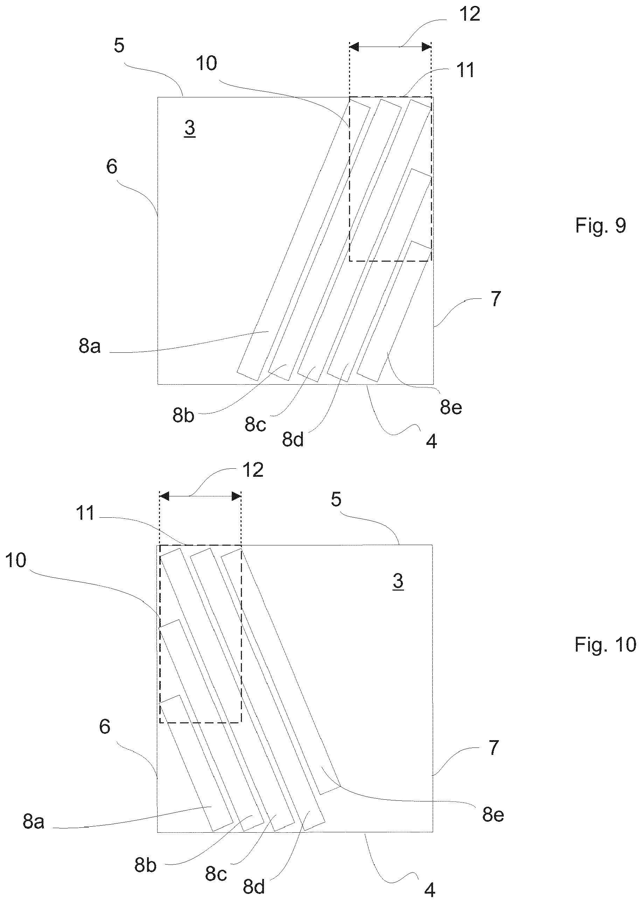

Figs. 9 and 10 both show embodiments of a conveyor unit 1a with conveyor segments 8a-8e angled similarly relative to the longitudinal axis A of the conveyor unit 1a.

For similar technical features as shown in the previous Figs., the same reference numbers have been used.

In both Figs. 9 and 10, the respective conveyor segments 8a-8e are angled similarly and are therefore parallel. The elements 2 to be conveyed can therefore only be introduced from one direction. The pattern of conveyor segments 8a-8e shown in Figs. 9 and 10 may also be combined so that elements 2 can be introduced from two different directions, but leave the conveyor unit 1a at the same outlet 11.

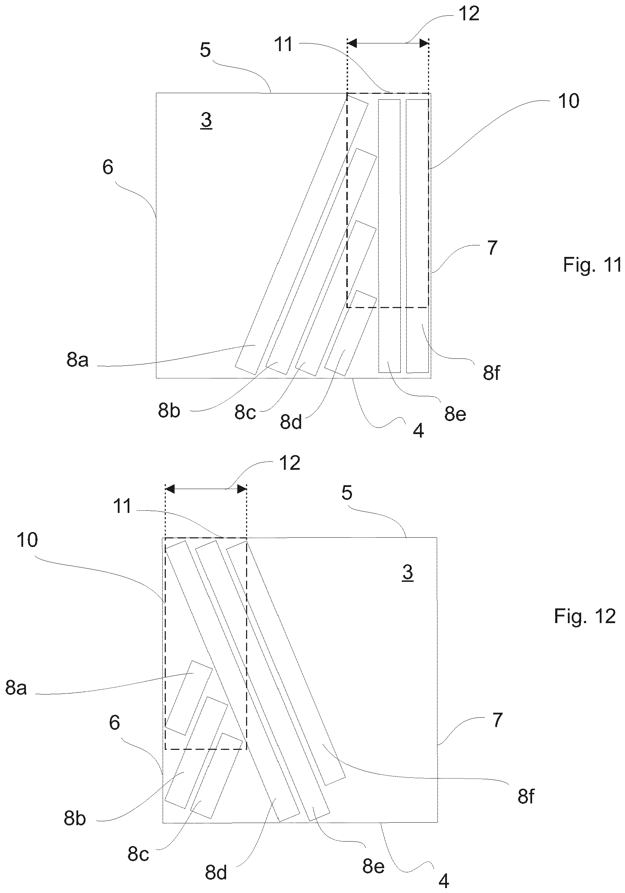

Fig. 11 shows an embodiment of a conveyor unit 1a with conveyor segments 8a-8f angled towards each other.

For similar technical features as shown in the previous Figs., the same reference numbers have been used.

In Fig. 11, two conveyor segments 8e-8f extend parallel to the longitudinal axis A of the conveyor unit 1a and are arranged along the second side edge 7 of the conveyor unit 1a. Four conveyor segments 8a-8d are arranged with an angle relative to said longitudinal axis A and point into the two parallel conveyor segments 8e-8f. Thus, elements 2 may be introduced to the conveyor unit 1a via either the right hand side of the first edge 4 or via the second side edge 7 of the conveyor unit 1a and still leave the conveyor unit 1a in a uniform/aligned manner via the outlet 11 arranged at a right side of the second edge 5.

Fig. 12 shows an embodiment of a conveyor unit 1a with conveyor segments 8a-8f angled towards each other and all angled relative to the longitudinal axis A of the conveyor unit 1a.

For similar technical features as shown in the previous Figs., the same reference numbers have been used.

Therefore, elements 2 may be introduced to the conveyor unit 1a via either the left hand side of the first edge 4 or via the first side edge 7 of the conveyor unit 1a and still leave the conveyor unit 1a in a uniform manner via the outlet 11 arranged at a left side of the second edge 5.

## Claims

1. A conveyor unit (1a) for aligning elements (2) during transportation along a surface (3) of said conveyor unit (1a), said conveyor unit (1a) is adapted to convey elements (2) from first positions on said surface (3) towards aligned second positions on said surface (3) of said conveyor unit (1a),
**characterised in, that**
said unit (1a) comprises multiple discrete conveyor segments (8a-8k) each extending along the surface (3) of said conveyor unit (1a) and each being defined by a starting point (9a-9k) and an end point (9a'-9k'), wherein at least part of said discrete conveyor segments (8a-8k) are oriented towards the same sub-section (10) of the surface (3) of said conveyer unit (1a) with their end points (9a'-9k') positioned in said sub-section (10), whereby during the transportation of said elements (2) along the surface (3) of said conveyer unit (1a), said elements (2) are aligned in said sub-section (10) so that they leave said conveyor unit (1a) in an aligned manner.

2. A conveyor unit (1a) according to claim 1, wherein at least part of said conveyor segments (8a-8k) extends linearly and are angled relative to a longitudinal axis (A) of the conveyor unit (1a).

3. A conveyor unit (1a) according to any of claims 1-2, wherein at least part of said conveyor segments (8a-8k) extends at least partly curvilinear.

4. A conveyor unit (1a) according to any of the preceding claims, wherein the intersection between said sub-section (10) and an edge of said surface (3) of said conveyor unit (1a) defines the outlet (11) for conveyed elements (2) from the conveyor unit (1a).

5. A conveyor unit (1a) according to claim 4, wherein the intersection between said sub-section (10), which is projected parallel with said longitudinal axis (A), and said edge defines the outlet (11) of conveyed elements (2) from the conveyor unit (1a).

6. A conveyor unit (1a) according to any of the preceding claims, wherein said conveyor segments (8a-8k) are conveyor belts.

7. A conveyor unit (1a) according to any of the preceding claims, wherein said conveyor segments (8a-8k) are conveyor rollers.

8. A conveyor unit (1a) according to any of the preceding claims, wherein at least two of the multiple discrete conveyor segments (8a-8k) are angled towards each other.

9. A conveyor unit (1a) according to any of the preceding claims, wherein at least two of the multiple discrete conveyor segments (8a-8k) converge towards each other.

10. A conveyor unit (1a) according to claim 4 or 5, wherein the end points (9a'-9k') are forming a continuous path in said sub-section (10), where said path ends at said outlet (11) of the conveyor unit (1a).

11. A conveyor unit (1a) according to any of the preceding claims, wherein the distance between an end point (9a'-9k') of one conveyor segment (8a-8k) and the location of another conveyor segment (8a-8k) is less than the width of the elements (2) to be conveyed.

12. A conveyor unit (1a) according to any of the preceding claims, wherein the distance between two consecutive conveyor segment end points (9a'-9k') in said sub-section (10) is less than the width of the elements (2) to be conveyed.

13. A conveyor unit (1a) according to any of the preceding claims, wherein at least two of the multiple discrete conveyor segments (8a-8k) have a different conveying speed.

14. A conveyor system (1) comprising a conveyor unit (1a) according to any of the preceding claims.
